# DEMANDE DE BREVET EUROPEEN

(11) **EP 0 768 728 A1**
(43) Date de publication de la demande: **16.04.1997**
(21) Numéro de dépôt: 96410105.9
(22) Date de dépôt: 04.10.1996
(51) Int. Cl.: H01R 9/26, H01H 71/08, H02B 1/20

(54) **Bornier électrique**

(30) Priorité: 16.10.1995 FR 9512306
(71) Demandeur: SCHNEIDER ELECTRIC SA, 92100 Boulogne Billancourt (FR)
(72) Inventeur: Velletaz, Gilbert, Schneider Electric, 38050 Grenoble Cedex 09 (FR); Gerbier, Philippe, Schneider Electric, 38050 Grenoble Cedex 09 (FR); Chapperon, Patrick, Schneider Electric, 38050 Grenoble Cedex 09 (FR)
(74) Mandataire: Ritzenthaler, Jacques

(57) **Abrégé**

L'invention concerne un bornier destiné notamment à assurer la distribution de l'énergie électrique à partir d'un appareil de tête tel un disjoncteur, vers des appareils de départ tels un interrupteur différentiel ou des disjoncteurs divisionnaires.

Ce bornier comprend au moins un bloc de connexion (2 à 5) fixé de manière amovible sur le rail précité (1) et renfermant un ensemble de barrettes conductrices (14 à 17) fixées à l'intérieur dudit bloc (2 à 5),chaque bloc (2 à 5) comportant sur sa face avant (2a), sensiblement en regard de chacune des barrettes (14 à 17), des moyens pour réaliser la connexion des câbles des appareils de départ auxdites barrettes. Au moins l'un des blocs précités (2 à 5) comporte des moyens de raccordement électrique des différentes barrettes (14 à 17), respectivement aux différentes bornes de sortie (10 à 13) de l'appareil de tête D, les blocs (2 à 5) comportant sur leurs faces latérales (2b, 3b), des moyens de liaison électrique M des barrettes de même phase de deux blocs juxtaposés permettant ainsi d'accroître le nombre de points de dérivation du bornier B en augmentant le nombre de blocs justaposés (2 à 5).

## Description

La présente invention concerne un bornier électrique destiné notamment à assurer la distribution de l'énergie électrique à partir d'un appareil de tête, tel un disjoncteur, fixé sur un rail, vers des appareils de départ tels un interrupteur différentiel ou des disjoncteurs divisionnaires.
On connaît un bornier du genre précédemment mentionné, tel que décrit dans la demande de brevet N° 2.677.179, et comprenant une ou plusieurs barrettes conductrices comportant des orifices de raccordement et des vis de blocage, lesdites barrettes étant supportées à leurs deux extrémités par deux pièces en matériau isolant fixées de manière amovible sur le rail. Ces barrettes s'étendant parallèlement au rail, sont reliées électriquement d'une part, chacune, à l'une des bornes de sortie de l'appareil de tête et d'autre part, aux appareils de départ par l'intermédiaire des orifices et vis précités.

Or, ce genre de borniers ne présentent qu'un nombre prédéterminé de points de raccordement correspondant au nombre d'orifices prévus sur les barrettes, lesquelles ne permettent également en général qu'un nombre limité de modes de raccordement, le plus souvent au moyen de vis de blocage.

La présente invention résout ces inconvénients et propose un bornier électrique permettant à l'électricien d'accroître le nombre de points de raccordement de façon rationnelle et aisée en fonction du besoin et comportant des modes de raccordement différents en fonction de la section des câbles à raccorder.

A cet effet, la présente invention a pour objet un bornier électrique du genre précédemment mentionné, ce bornier étant caractérisé en ce qu'il comporte au moins un bloc de connexion fixé de manière amovible sur le rail précité et renfermant un ensemble de barrettes conductrices fixées à l'intérieur dudit bloc, les blocs comportant sur leur face avant, sensiblement en regard de chacune des barrettes, des moyens pour réaliser la connexion des câbles des appareils de départ auxdites barrettes, en ce qu'au moins l'un des blocs précités comporte des moyens de raccordement électrique des différentes barrettes, respectivement aux différentes bornes de sortie de l'appareil de tête,.chaque bloc comportant sur l'une au moins de ses faces latérales, des moyens de liaison électrique M des barrettes de même phase de deux blocs juxtaposés permettant d'accroître le nombre de points de dérivation du bornier en augmentant le nombre de blocs justaposés.
- Selon une réalisation particulière de l'invention, ce bornier comporte au moins un bloc comportant des moyens de connexion adaptés à raccorder des câbles de section différentes.
- Selon une caractéristique particulière de l'invention, il comporte au moins un bloc dit à connectique homogène, permettant le raccordement de câble de section constante.
- Avantageusement, il comporte au moins deux blocs dits à connectique homogène, dont les moyens de connexion sont adaptés à raccorder des câbles de section différente d'un bloc à l'autre.
- Selon une caractéristique particulière, il comporte un bloc de base à connectique mixte comportant les moyens de raccordement précités et plusieurs rangées identiques de moyens de connexion, les moyens de connexion d'une même rangée étant adaptés à raccorder des câbles de section croissante ou décroissante d'un côté à l'autre du bloc.
- Avantageusement, le bornier comporte, en outre, au moins trois blocs à connectique homogène juxtaposés au bloc de base et permettant le raccordement de câbles de sections différentes d'un bloc à l'autre.
- Selon une autre caractéristique, les moyens de liaison précités comprennent, pour chacun des blocs, des contacts glissants prévus sur l'une des faces latérales du bloc, coopérant avec des pinces prévues sur la face latérale opposée du bloc juxtaposé au précédent et/ou des systèmes à cage à vis prévus sur deux faces latérales opposées de deux blocs juxtaposés.
- Avantageusement, les sytèmes à cage à vis sont adaptés également au raccordement de câbles présentant une section importante.
- Selon une autre caractéristique, les moyens de connexion des câbles aux barrettes comprennent chacun deux orifices prévus sur la face avant des boîtiers, coopérant avec des pinces à ressort reliées électriquement aux barrettes, les deux orifices étant destinés respectivement, au passage du câble et à recevoir un outil destiné à l'actionnement de la pince.
- Selon une réalisation particulière, l'appareil de tête est un disjoncteur tripolaire et neutre et chaque bloc comporte quatre barrettes associées à quatre rangées de moyens de connexion.

Mais d'autres avantages et caractéristiques de l'invention apparaitront mieux dans la description détaillée qui suit et se réfère aux dessins annexés, donnés uniquement à titre d'exemple et dans lesquels :
- La figure 1 est une vue en perspective, illustrant une réalisation particulière de l'invention dans laquelle un disjoncteur est associé à un bloc de base et à trois blocs d'extension,
- Les figures 2 et 3 illustrent deux des blocs d'extension de la figure précédente, les deux blocs étant indépendants sur la figure 2, et reliés électriquement sur la figure 3,
- La figure 4 est une vue de droite de l'un des blocs précédents,
- La figure 5 est une vue en coupe schématique de ce même bloc, et
- La figure 6 est une vue partielle en perspective, et comportant un arraché, de la partie supérieure d'un bloc.

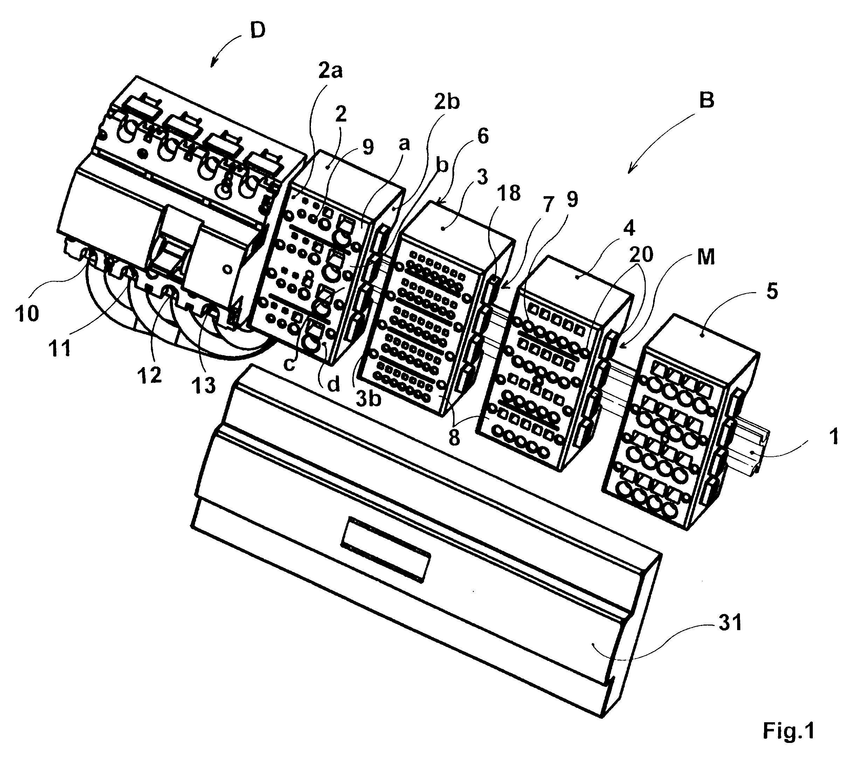

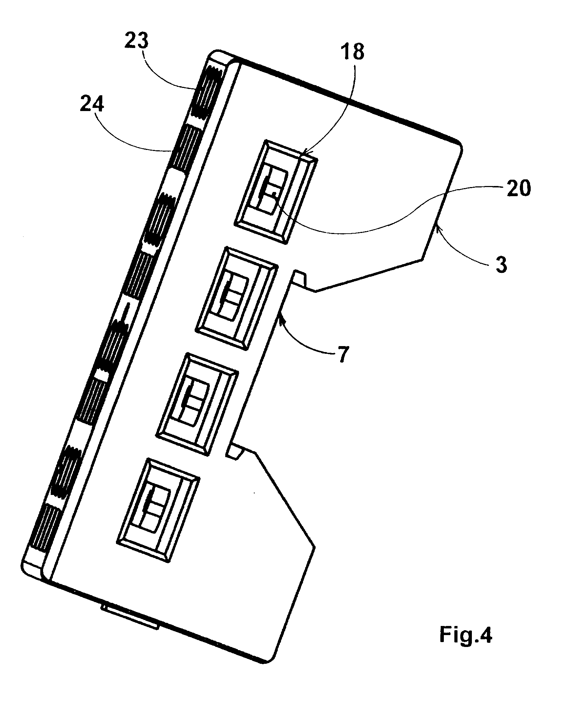

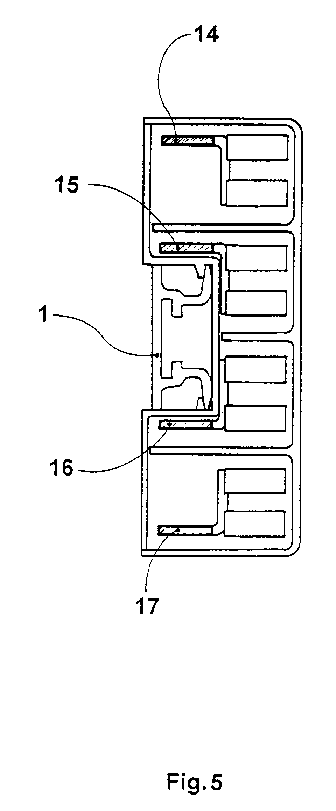

Sur la figure 1, on voit un disjoncteur tripolaire et neutre D monté sur un rail 1, et associé à un bornier B conforme à l'invention permettant de distribuer l'énergie électrique à l'intérieur d'un tableau à partir du disjoncteur D vers des appareils de départ, tels des disjoncteurs divisionnaires, des contacteurs, interrupteurs différentiels etc...
Ce bornier B est constitué par quatre blocs de connexion 2 à 5 montés sur le même rail 1. Chaque bloc 2 à 5 est constitué par un boîtier creux de forme sensiblement parallélépipédique à l'intérieur duquel sont fixées quatre barrettes conductrices (non représentées sur la figure 1 mais représentées en 14, 15, 16, 17 sur la figure 5), ledit boitier comportant sur sa face arrière 6 un évidement 7 (visible sur la figure 4) par lequel il est destiné à être monté sur le rail 1 et fixé sur celui-ci grâce à des moyens d'encliquetage non représentés. Chacun des blocs 2 à 5 comporte également sur sa face avant 8, un certain nombre d'orifices 9 destinés à permettre le raccordement électrique des câbles des appareils de départ (non représentés) aux barrettes correspondantes, grâce à des moyens de raccordement qui seront décrits ultérieurement. Les bornes de sortie 10 à 13 du disjoncteur D correspondant respectivement aux phases 1, 2 et 3 et au neutre, sont reliées électriquement (par exemple soudées) respectivement aux quatre barrettes du bloc de connexion 2, dit de base, situé directement à droite du disjonteur D, chaque barrette représentant une phase.

Les barrettes 14 à 17 de même phase de deux blocs adjacents 2, 3 ; 3,4 ; 4,5 sont reliées électriquement grâce à des moyens de liaison M prévus sur les côtés latéraux 2b, 3b des boitiers. Cette liaison peut être réalisée pour chaque niveau de barrette 14 à 17, soit au moyen d'un élément de contact glissant 18 prévu sur le côté droit des boîtiers 2 à 5, coopérant avec une pince prévue sur le côté gauche du boitier adjacent, soit par un système de cage à vis 20 (illustré sur la figure 4) prévu sur le côté droit des boîtiers 2 à 5 à l'intérieur de l'élément 18 coopérant avec un élément complémentaire en saillie (non représenté), prévu sur le côté gauche des boîtiers adjacents. On notera que les systèmes à cage à vis 20 permettront aussi le raccordement aux barrettes de câbles de grands diamètres, par exemple de 25 mm. On notera que le raccordement par contact glissant permettra d'assurer un montage et un démontage rapide et aisé ne necéssitant pas obligatoirement d'outil.

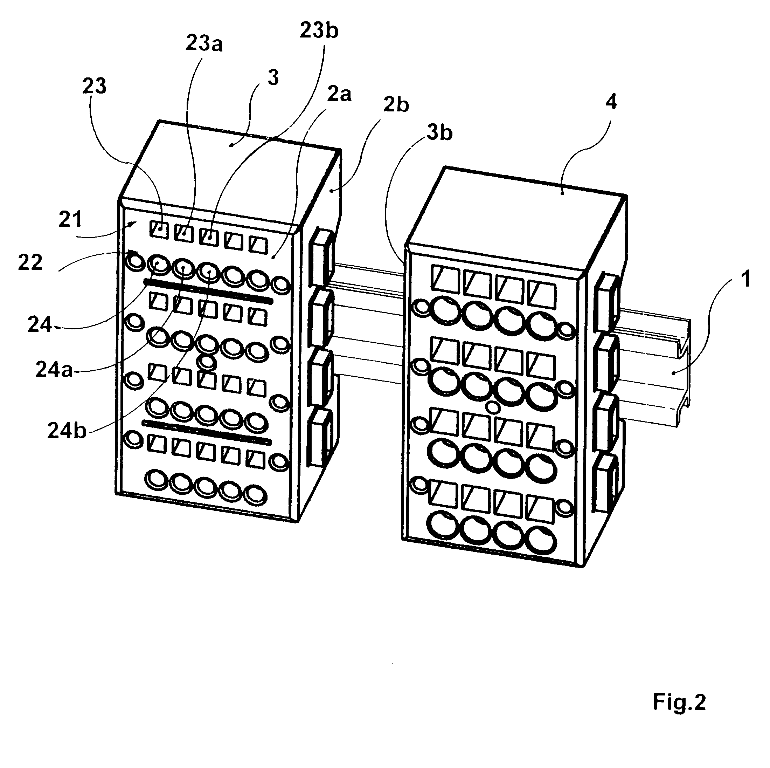

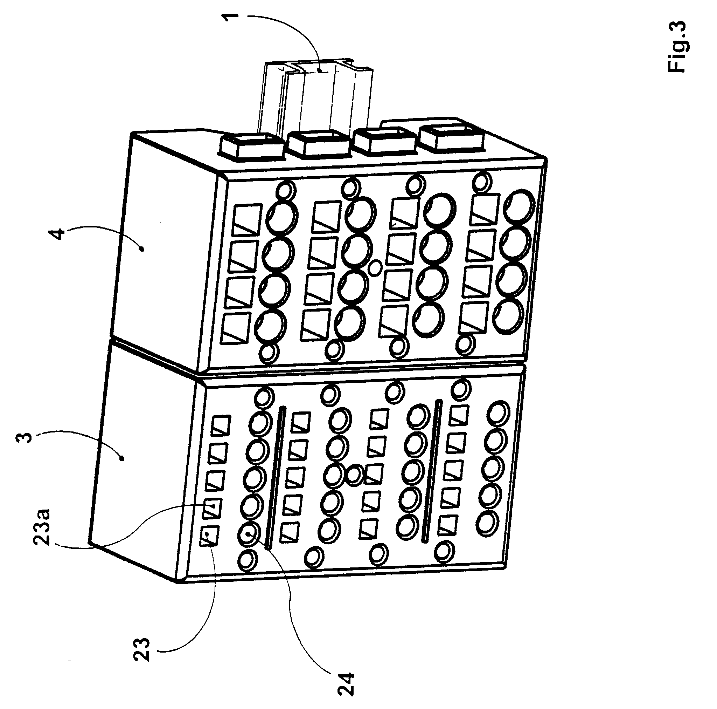

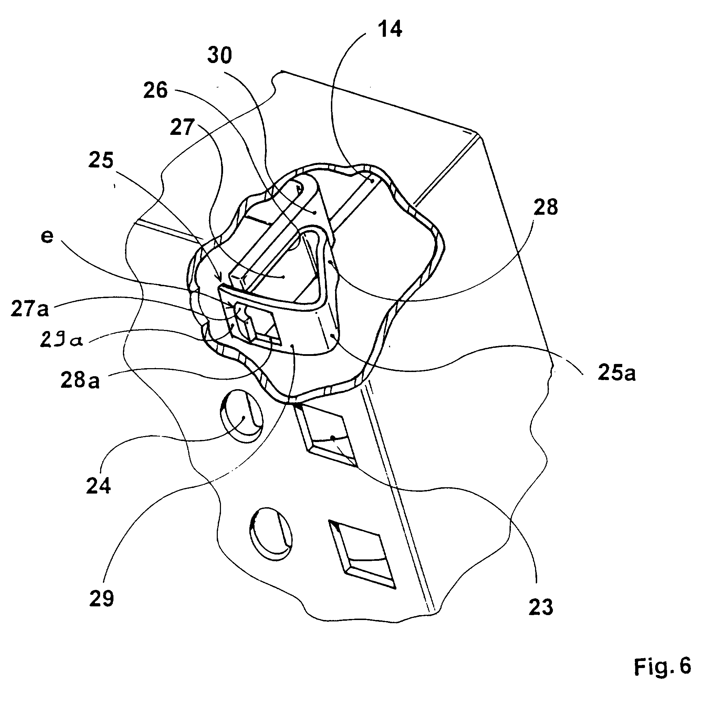

Sur les figures, on voit que chacune des barrettes 14 à 17 est associée, à deux rangées 21, 22 d'orifices 23, 23a, 23b, 24, 24a, 24b respectivement de section carrée 21 et de section circulaire 22 prévues sur la face avant des boîtiers.Ces orifices sont destinés à coopérer avec des éléments de connexion en forme de ressort à pince 25 reliés électriquement aux barrettes 14 à 17 tels qu'illustrés sur la figure 6, lors du raccordement électrique des câbles des appareils de départ auxdites barrettes. Tous les blocs de connexion représentés sur les figures 2 à 5comprennent des rangées de points de connexion dits rapides, du type à pince. Cette pince 25 est constituée par une lame élastique 26 recourbée deux fois de manière à former trois parties sensiblement planes 27, 28, 29, dont l'une 27 est fixée sur un support conduteur 30 relié électriquement à la barrette concernée 14. Cette partie plane 27 comporte une extrémité 27a recourbée et introduite dans une ouverture 28a ménagée dans l'autre extrémité 29a de la lame 26. Ainsi, on effectue le raccordement d'un cable appartenant à un appareil de départ en appuyant sur la partie supérieure 25a de la pince par l'intermédiaire d'un tourne-vis introduit dans l'orifice carré 23 situé en regard de ladite pince 25, ce qui engendre une déformation élastique de la lame 26 faisant apparaître un espace libre e entre les deux extrémités 27a, 29a, de la lame 26. Cet espace e est destiné à recevoir l'extrémité du câble introduit par l'orifice inférieur circulaire 24, lequel câble est retenu fermement entre ces deux extrémités 27a, 29a lors du retrait du tournevis entraînant le relâchement de la lame 26.
Chaque bloc de connexion 2 à 5 comporte donc un ensemble de moyens de connexion constitués principalement chacun par deux orifices respectivement de section carrée 23, 23a, 23b... et de section circulaire 24, 24a, 24b..., et une pince 25 reliée à l'une des barrettes 14 à 17.
On voit sur la figure 1, que le bloc de base 2 comporte quatre rangées a, b, c, d de moyens de connexion horizontales servant à réaliser des dérivations de courant. Les différents moyens de connexion d'une même rangée sont adaptés respectivement à raccorder des câbles de sections différentes, ce qui apparait bien sur la figure 1 sur laquelle les orifices 9, sont de section croissante en partant de la gauche du bloc de connexion 2, vers la droite. Les blocs dits d'extension 3 à 5, quant à eux, sont équipés de moyens de connexion identiques pour un même bloc, mais différents d'un bloc à l'autre. Ainsi, le bloc de base 2 pourra par exemple permettre le raccordement en face avant de câbles dont la section pourra varier de 1,5 à 16 mm, tandis que les blocs d'extension 3 à 5 assureront la connexion de cables allant avantageusement de 2,5 à 10 mm. On notera que le raccordement d'un cable de 25 mm pourra s'effectuer latéralement par l'intermédiaire du système de connexion du type à cage à vis 20 prévu sur le côté droit des blocs 2 à 5.

Ce raccordement d'un cable de section importante pourra donc s'effectuer sur le bloc de base 2 lorsque celui-ci sera seul et ne sera pas raccordé à un bloc d'extension 3 à 5, ou bien sur le dernier des blocs d'extension (5 sur la figure 1).

On notera que lorsque les câbles de sortie 10 à 13 du disjoncteur seront soudés sur les barrettes du bloc de base, celui-ci ne comportera avantageusement pas de moyen de raccordement sur son côté adjacent au disjoncteur. Cependant, ces cables de sortie pourraient également être raccordés aux barrettes au moyen de systèmes à cage à vis prévus sur ce côté du disjoncteur.

Il pourrait également être envisagé de raccorder les câbles de sortie du disjoncteur à un bloc d'extension

Le bornier de l'invention pourra aussi bien être utilisé en tête de tableau qu'en tête de groupe d'appareils, et monté à droite ou à gauche d'un appareil de tête tel un disjoncteur ou un interrupteur.

On notera également qu'un capot 31 pourra être prévu pour obturer la face avant du coffret électrique et pour assurer la protection des personnes, masquer les câbles et donner une esthétique similaire à celle de l'appareil de tête.

On a donc réalisé, grâce à l'invention, un bornier électrique modulaire présentant des points de connexion de technologies mixtes (cage à vis/ressort) permettant le raccordement de câbles de section variable et permettant d'adapter le nombre de points de raccordement en fonction du besoin, de manière rapide et aisée.

Bien entendu, l'invention n'est pas limitée au mode de réalisation décrit et illustré qui n'a été donné qu'à titre d'exemple.

C'est ainsi que d'autres types de liaison inter-bloc ou bien d'autres moyens de raccordement des câbles aux barrettes pourront être envisagés.

Au contraire, l'invention comprend tous les équivalents techniques des moyens décrits ainsi que leurs combinaisons si celles-ci sont effectuées suivant son esprit.

## Revendications

1. Bornier destiné notamment à assurer la distribution de l'énergie électrique à partir d'un appareil de tête tel un disjoncteur, fixé sur un rail, vers des appareils de départ tels un interrupteur différentiel ou des disjoncteurs divisionnaires, du genre comprenant au moins un bloc de connexion fixé de manière amovible sur ledit rail et renfermant une ou plusieurs barrettes conductrices s'étendant parallèlement audit rail, lesdites barrettes étant reliées électriquement respectivement aux bornes de sortie de l'appareil de tête, lesdits blocs comportant sur leur face avant sensiblement en regard de chacune des barrettes, des moyens de connexion des cables des appareils de départ auxdites barrettes, caractérisé en ce qu'il comporte au moins un bloc dit de base (2) à connectique mixte, comportant des moyens de connexion adaptés à raccorder des câbles de sections différentes, ledit bloc (2) comportant d'une part les moyens de raccordement des différentes barrettes (14 à 17) respectivement aux différentes bornes de sortie (10 à 13) de l'appareil de tête D, et d'autre part, sur l'une de ses faces latérales (2b, 3b), des moyens M permettant le raccordement électrique de ses barrettes (14 à 17), aux barrettes de même phase d'au moins un bloc juxtaposé.

2. Bornier selon la revendication 1, caractérisé en ce que le bloc de base (2) comporte plusieurs rangées identiques a, b, c, d de moyens de connexion, les moyens de connexion d'une même rangée a, b, c, d étant adaptés à raccorder des câbles de section croissante ou décroissante d'un côté à l'autre du bloc.

3. Bornier selon la revendication 1 ou 2, caractérisé en ce que le(s) bloc(s) juxtaposé(s) comprend/(comprennent) au moins un bloc (3 à 5) dit à connectique homogène, permettant le raccordement de câble de section constante, ledit bloc comportant sur l'une au moins de ses faces latérales (2b, 3b) des moyens de liaison électrique M avec un autre bloc.

4. Bornier selon la revendication 3, caractérisé en ce qu'il comporte au moins deux blocs (3 à 5) dits à connectique homogène, dont les moyens de connexion (9, 25) sont adaptés à raccorder des câbles de section différente d'un bloc à l'autre.

5. Bornier selon l'une quelconque des revendications précédentes, caractérisé en ce que les moyens de liaison précités M comprennent, pour chacun des blocs (2 à 5), des contacts glissants (18) prévus sur l'une (2b) des faces latérales du bloc, coopérant avec des pinces prévues sur la face latérale opposée (3b) du bloc juxtaposé (3) au précédent.

6. Bornier selon l'une quelconque des revendications précédentes, caractérisé en ce que les moyens de liaison M comprennent des systèmes à cage à vis (20) prévus sur deux faces latérales opposées (2b, 3b) de deux blocs juxtaposés (2, 3).

7. Bornier selon la revendication 6, caractérisé en ce que les sytèmes à cage à vis (20) sont destinés également au raccordement de câbles présentant une section importante.

8. Bornier selon l'une quelconque des revendications précédentes, caractérisé en ce que les moyens de connexion des câbles des appareils de départ aux barrettes (14 à 17) comprennent chacun deux orifices (23, 24) prévus sur la face avant (2a) des boîtiers, coopérant avec des pinces à ressort (25) reliées électriquement aux barrettes (14 à 17), les deux orifices (23, 24) étant destinés respectivement, au passage d'un câble et à recevoir un outil destiné à l'actionnement de la pince (25).

9. Bornier selon l'une quelconque des revendications précédentes, caractérisé en ce que l'appareil de tête est un disjoncteur tripolaire et neutre D et en ce que chaque bloc (2 à 5) comporte quatre barrettes (14 à 17) associées à quatre rangées (a, b, c, d) de moyens de connexion.
